# EUROPEAN PATENT APPLICATION

(11) **EP 4 303 385 A1**
(43) Date of publication of application: **10.01.2024**
(21) Application number: 22762412.9
(22) Date of filing: 23.02.2022
(51) Int. Cl.: E05B 65/52, E05B 47/00, E05B 15/00, E05B 49/00

(54) **LOCK AND STORAGE CABINET**

(30) Priority: 05.03.2021 CN 202110248725
(71) Applicant: Weihai New Beiyang Digital Technology Co., Ltd., Weihai, Shandong 264203 (CN); Shandong New Beiyang Information Technology Co., Ltd., Weihai, Shandong 264203 (CN)
(72) Inventor: JIANG, Jinhao, Weihai, Shandong 264203 (CN); MA, Yunpeng, Weihai, Shandong 264203 (CN); ZOU, Dezhi, Weihai, Shandong 264203 (CN); JIANG, Tianxin, Weihai, Shandong 264203 (CN)
(74) Representative: Cabinet Beaumont
(86) International application number: PCT/CN2022/077369
(87) International publication number: WO 2022/183946

(57) **Abstract**

Provided are a lock and a storage cabinet, relating to the field of storage devices. The storage cabinet includes a lock catch and the preceding lock. The lock is configured to be mated with the lock catch. The lock includes a housing, a lock hook, a locking member, and a drive assembly. The lock hook and the locking member are pivotally attached to the housing. The lock hook has a locking position where the lock hook is mated with the lock catch and an unlocking position where the lock hook is separated from the lock catch. The locking member has a first position for locking the lock hook at the locking position and a second position for unlocking the lock hook at the locking position. The drive assembly includes a motor and a driving member. The driving member is in transmission connection with the output shaft of the motor. The driving member includes at least one driving portion having a helical surface. The locking member has an acceptor. In the state where the output shaft of the motor drives the driving member to rotate, the helical surface can be mated with the acceptor to drive the locking member to move from the first position to the second position.

## Description

This application claims priority to Chinese Patent Application No. 202110248725.2 filed with the China National Intellectual Property Administration (CNIPA) on Mar. 5, 2021, the disclosure of which is incorporated herein by reference in its entirety.

### TECHNICAL FIELD

The present application relates to the field of storage devices, for example, a lock and a storage cabinet.

### BACKGROUND

The storage cabinet provided by the related art includes a plurality of box bodies for storing articles. Each box has an opening. A box door and a lock are disposed at the opening. The box door has a closed position for closing the opening and an open position for opening the opening. The lock is configured to lock the box door at the closed position. The lock includes a drive assembly, a lock hook, and a locking member. The lock hook and the locking member are disposed on one of the box door and the box. The other of the box door and the box is provided with a lock catch. The lock hook has a locking position where the lock hook is mated with the lock catch and an unlocking position where the lock hook is separated from the lock catch. The locking member is mated with the lock hook to lock the lock hook at the locking position or to unlock the position of the lock hook. The drive assembly is configured to drive the locking member to move to unlock the lock hook when unlocking is needed, so that the box door can be opened.

However, in the related art, the lock has the problems of a complex structure and a large volume, which is not conducive to miniaturization design.

### SUMMARY

The present application provides a lock and a storage cabinet. The lock is simple and compact in structure and conducive to miniaturization design.

In a first aspect, the present application provides a lock. The lock is configured to be mated with a lock catch. The lock includes a housing, a lock hook, a locking member, and a drive assembly. The lock hook and the locking member are pivotally attached to the housing. The lock hook has a locking position where the lock hook is mated with the lock catch and an unlocking position where the lock hook is separated from the lock catch. The locking member has a first position for locking the lock hook at the locking position and a second position for unlocking the lock hook at the locking position. The drive assembly includes a motor and a driving member. The driving member is in transmission connection with the output shaft of the motor. The driving member includes at least one driving portion having a helical surface. The locking member has an acceptor. In the state where the output shaft of the motor drives the driving member to rotate, the helical surface can be mated with the acceptor to drive the locking member to move from the first position to the second position.

In a second aspect, the present application provides a storage cabinet. The storage cabinet includes a box body, a box door, a lock catch, and the lock according to any one of the preceding embodiment. The box is provided with an opening. The box door is movably connected to the box. The box door is configured to close or open the opening. The lock catch is disposed in one of the box door and the box body, and the lock is disposed in the other of the box door and the box. In the state where the box door closes the opening, the lock hook of the lock is mated with the lock catch to lock the box door at the position where the opening is closed.

### BRIEF DESCRIPTION OF DRAWINGS

FIG. 1 is a view illustrating the structure of a storage cabinet according to an embodiment of the present application.
FIG. 2 is a partial view illustrating the structure of a lock when a lock hook is at a locking position and a locking member is at a first position according to an embodiment of the present application.
FIG. 3 is a partial view illustrating the structure of the lock when the lock hook is at an unlocking position and the locking member is at a second position according to an embodiment of the present application.
FIG. 4 is a view illustrating the structure of an acceptor and a driving member according to an embodiment of the present application.
FIG. 5 is a view illustrating the structure of the driving member according to an embodiment of the present application.
FIG. 6 is a view taken from a first viewing angle to illustrate the structure of the lock according to an embodiment of the present application.
FIG. 7 is a view illustrating the structure of a motor, the driving member, and a detection member according to an embodiment of the present application.
FIG. 8 is an exploded view of the structure of the motor, the driving member, and the detection member according to an embodiment of the present application.
FIG. 9 is a view illustrating the structure of the locking member according to an embodiment of the present application.
FIG. 10 is a view taken from a second viewing angle to illustrate the structure of the lock according to an embodiment of the present application.
FIG. 11 is a partial view illustrating the structure of the lock according to an embodiment of the present application.
FIG. 12 is an exploded view of the structure of the lock according to an embodiment of the present application.
FIG. 13 is a section view of the lock according to an embodiment of the present application.
FIG. 14 is a view illustrating the structure of a shield and a drive assembly according to an embodiment of the present application.
FIG. 15 is an exploded view of the structure of the shield and the drive assembly according to an embodiment of the present application.

### Reference list

- 010: storage cabinet
- 100: box body
- 101: opening
- 110: box door
- 120: lock catch
- 200: lock
- 210: housing
- 211: first housing
- 212: second housing
- 213: first slot
- 214: second slot
- 215: limit plate
- 220: lock hook
- 221: hold slot
- 230: locking member
- 231: acceptor
- 232: groove
- 233: blocking surface
- 234: insertion hole
- 235: emergency pull rod
- 240: drive assembly
- 241: motor
- 242: driving member
- 243: driving portion
- 244: helical surface
- 245: sleeve
- 246: chassis
- 247: guide column
- 248: central hole
- 249: output shaft
- 251: first rotation shaft
- 252: second rotation shaft
- 253: first elastic member
- 254: second elastic member
- 260: detection assembly
- 261: first sensor
- 262: detection member
- 263: second sensor
- 264: support shaft
- 265: connection ring
- 266: detection sheet
- 267: detection gap
- 268: light emitter
- 269: optical receiver
- 270: shield
- 271: support surface
- 272: positioning hole
- 273: limiting groove
- 274: motor hold groove
- 275: driving member hold groove
- 276: detection member hold groove
- 277: locking slot
- 278: notch
- 279: support shaft hold groove
- 281: transition surface
- 282: limit surface

### DETAILED DESCRIPTION

The technical solutions in embodiments of the present application are described hereinafter clearly and completely in connection with the drawings in the embodiments of the present applications. Apparently, the described embodiments are part, not all, of embodiments of the present application. Generally, the components of the embodiments of the present application described and illustrated in the drawings herein may be arranged and designed through various configurations.

It is to be noted that similar reference numerals and letters indicate similar items in subsequent drawings. Therefore, once an item is defined in one drawing, the item needs no more definition and explanation in the subsequent drawings.

In the description of the present application, it is to be noted that the orientational or positional relationships indicated by terms "inside" and "outside" are based on the orientational or positional relationships illustrated in the drawings or the orientational or positional relationship that products of the present application are usually used in, which are for the mere purpose of facilitating and simplifying the description of the present application and do not indicate or imply that the apparatus or element referred to has a specific orientation and is constructed and operated in a specific orientation, and thus it is not to be construed as limiting the present application. Moreover, terms "first" and "second" are merely for distinguishing the description and are not to be construed as indicating or implying relative importance.

In the description of the present application, it is to be noted that unless otherwise expressly specified and limited, the term "disposed" and "connected" are to be construed in a broad sense as securely connected, detachably connected, or integrated; mechanically connected or electrically connected; directly connected to each other or indirectly connected to each other via an intermediary; or intraconnected between two components. For those of ordinary skill in the art, specific meanings of the preceding terms in the present application may be construed according to specific circumstances.

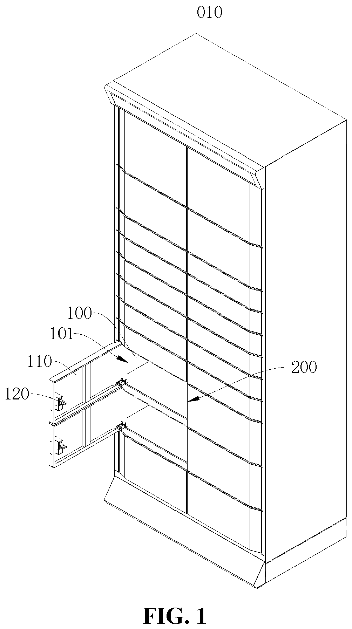

FIG. 1 is a view illustrating the structure of a storage cabinet 010 according to an embodiment of the present application. Referring to FIG. 1, this embodiment provides a storage cabinet 010. The storage cabinet 010 may be placed in a residential community, and is configured to store a to-be-fetched parcel or a to-be-mailed express, or the storage cabinet 010 may be placed in a supermarket and a railway station, and is configured to temporarily store an article carried by a user. This is not limited in the embodiment.

Referring to FIG. 1, in this embodiment, the storage cabinet 010 includes a box body 100, a box door 110, a lock catch 120, and a lock 200. The box body 100 is provided with an opening 101. The box door 110 is movably connected to the box body 100. The box door 110 is configured to close or open the opening 101. The lock catch 120 is disposed on the box door 110. The lock 200 is disposed on the box body 100. In the state where the box door 110 closes the opening 101, the lock 200 is mated with the lock catch 120 to lock the box door 110 at the position where the opening 101 is closed. When the box door 110 opens the opening 101, the user can take out and place an article in the box body 100 through the opening 101. When the box door 110 closes the opening 101, and the lock 200 is mated with the lock catch 120, the article can be reliably stored in the box body 100.

Optionally, in this embodiment, the box door 110 is pivotally connected to the box body 100.

Of course, in other embodiments, the box door 110 may also be slidably connected to the box body 100, which is not limited in this embodiment.

In this embodiment, the storage cabinet 010 includes a plurality of box bodies 100 and a plurality of box doors 110. The plurality of box doors 110 are movably connected to the plurality of box bodies 100 in one-to-one correspondence, and the plurality of box bodies 100 are arranged in M columns and N rows, such as 2 columns and 11 rows, 3 columns and 10 rows, and 4 columns and 8 rows, which is not limited in this embodiment.

Optionally, in this embodiment, the storage cabinet 010 further includes a plurality of lock catches 120 and a plurality of locks 200. The plurality of lock catches 120 are disposed on the plurality of box doors 110 in one-to-one correspondence. The plurality of locks 200 are disposed on the plurality of box bodies 100 in one-to-one correspondence. The plurality of lock catches 120 can be mated with the plurality of locks 200 in one-to-one correspondence.

Of course, in other embodiments, the lock catch 120 is disposed on the box body 100, and the lock 200 is disposed on the box door 110. A plurality of lock catches 120 are disposed on a plurality of box bodies 100 in one-to-one correspondence, and a plurality of locks 200 are disposed on a plurality of box doors 110 in one-to-one correspondence. Alternatively, in other embodiments, part of the box bodies 100 are provided with locks 200, the other part of the box bodies 100 are provided with lock catches 120, part of the box doors 110 are provided with lock catches 120, and the other part of the box doors 110 are provided with locks 200. The box doors 110 provided with the lock catches 120 are movably connected to the box bodies 100 provided with the locks 200. The box doors 110 provided with the locks 200 are movably connected to the box bodies 100 provided with the lock catches 120.

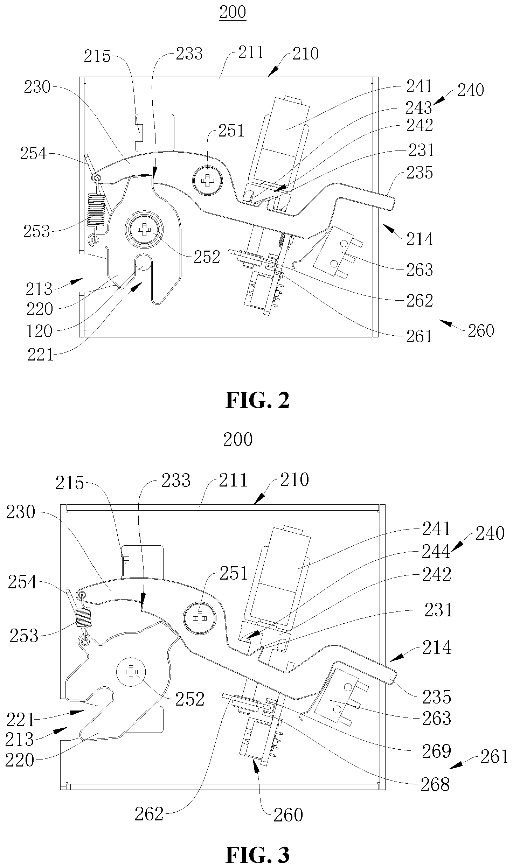

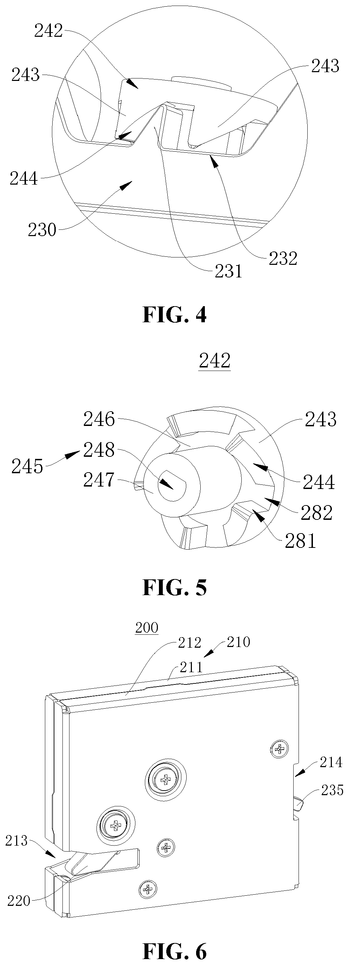

FIG. 2 is a partial view illustrating the structure of a lock 200 when a lock hook 220 is at a locking position and a locking member 230 is at a first position according to an embodiment of the present application. FIG. 3 is a partial view illustrating the structure of the lock 200 when the lock hook 220 is at an unlocking position and the locking member 230 is at a second position according to an embodiment of the present application. FIG. 4 is a view illustrating the structure of an acceptor 231 and a driving member 242 according to an embodiment of the present application. FIG. 5 is a view illustrating the structure of the driving member 242 according to an embodiment of the present application.

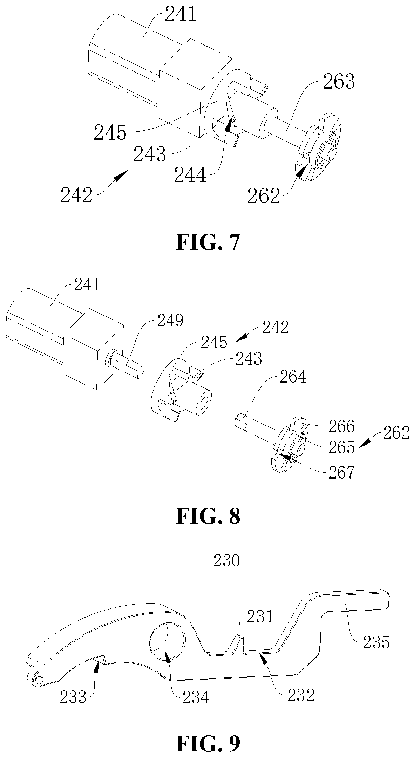

Referring to FIGS. 2, 3, and 4, in this embodiment, the lock 200 includes a housing 210, a lock hook 220, a locking member 230, and a drive assembly 240. The lock hook 220 and the locking member 230 are pivotally attached to the housing 210. The lock hook 220 has a locking position where the lock hook 220 is mated with the lock catch 120 and an unlocking position where the lock hook 220 is separated from the lock catch 120. The locking member 230 has a first position for locking the lock hook 220 at the locking position and a second position for unlocking the lock hook 220 at the locking position. The drive assembly 240 is configured to drive the locking member 230 to move from the first position to the second position. The drive assembly 240 includes a motor 241 and a driving member 242. The driving member 242 is in transmission connection with the output shaft 249 (as shown in FIG. 8) of the motor 241. The driving member 242 includes at least one driving portion 243 having a helical surface 244. The locking member 230 has an acceptor 231. In the state where the output shaft 249 of the motor 241 drives the driving member 242 to rotate, the helical surface 244 can be mated with the acceptor 231 to drive the locking member 230 to move from the first position to the second position. Specifically, the helical surface 244 helically rises around the rotation axis of the driving member 242. The helical surface 244 includes a highest end and a lowest end. There is a displacement difference between the highest end and the lowest end along the direction of the rotation axis of the driving member 242. When the driving member 242 rotates, the contact position between the helical surface 244 and the acceptor 231 moves from the lowest end of the helical surface 244 to the highest end of the helical surface 244, so that the locking member 230 is pushed to move from the first position to the second position.

When the box door 110 closes the opening 101, the lock hook 220 moves to the locking position to be mated with the lock catch 120, and the locking member 230 moves the first position to lock the lock hook 220 at the locking position. In this manner, the lock hook 220 of the lock 200 can be reliably mated with the lock catch 120 to reliably lock the box door 110 at the position where the opening 101 is closed. When it is necessary to make the box door 110 open the opening 101, the output shaft 249 of the motor 241 is used to drive the driving member 242 to rotate, the helical surface 244 of the driving portion 243 rotates synchronously with the driving member 242, the acceptor 231 of the locking member 230 is mated with the helical surface 244, and the movement of the contact position between the rotating helical surface 244 and the acceptor 231 is used to push the locking member 230 to rotate from the first position to the second position. In this manner, the lock hook 220 is released from the locking member 230 so that the lock hook 220 can move to the unlocking position and be separated from the lock catch 120 to complete unlocking. The lock 200 provided by the present application is simple and compact in structure, which is conducive to miniaturization design.

Referring to FIG. 5, the driving member 242 further includes a transition surface 281 and a limit surface 282. A first end of the transition surface 281 is connected to the highest end of the helical surface 244. A second end of the transition surface 281 is connected to a first end of the limit surface 282. A second end of the limit surface 282 is connected to the lowest end of the helical surface 244. Referring to FIGS. 2 and 3, in this embodiment, the lock 200 further includes a first elastic member 253. The first elastic member 253 is connected to the locking member 230. The first elastic member 253 is configured to enable the locking member 230 to always have a tendency to rotate toward the first position. When the locking member 230 is at the first position, the acceptor 231 abuts against the limit surface 282. Specifically, when the contact position between the helical surface 244 and the acceptor 231 moves to the highest end of the helical surface 244, the locking member 230 is driven to move to the second position. As the driving member 242 continues to rotate, the acceptor 231 is separated from the helical surface 244. The acceptor 231 of the locking member 230 can move along the transition surface 281 under the action of the first elastic member 253 until the acceptor 231 abuts against the limit surface 282, so that the locking member 230 resets to the first position. With such configuration, when the acceptor 231 of the locking member 230 is separated from the helical surface 244, the locking member 230 can be reset to the first position by the elasticity of the first elastic member 253 to lock the lock hook 220 at the locking position. The first elastic member 253 also ensures the reliability of the locking member 230 at the first position, so that the lock hook 220 is reliably locked at the locking position by the locking member 230, and the reliability of the mating between the lock hook 220 and the locking catch 120 is ensured.

Optionally, the transition surface 281 is vertically connected to the limit surface 282. With such configuration, it is beneficial for the locking member 230 to quickly move to the first position under the action of the first elastic member 253, thereby effectively locking the position of the locking hook 220.

Optionally, a first end of the first elastic member 253 is connected to the locking member 230, and a second end of the first elastic member 253 is connected to the lock hook 220. Under the elasticity of the first elastic member 253, the locking member 230 has a tendency to move toward the first position, and the lock hook 220 has a tendency to rotate toward the unlocking position. In this manner, when the motor 241 drives the driving member 242 to rotate so that the helical surface 244 is mated with the acceptor 231 to drive the locking member 230 to move to the second position, the lock hook 220 in the locking position is unlocked, and the lock hook 220 can move to the unlocking position under the action of the first elastic member 253 to enable the lock hook 220 to be separated from the lock catch 120, whereby the movement of two components (i.e., the locking member 230 and the lock hook 220) is controlled by one component (i.e., the first elastic member 253), which simplifies the structure of the lock 200 and is more conducive to miniaturization design.

Optionally, the first elastic member 253 is a tension spring. Of course, in other embodiments, the first elastic member 253 may also be other elastic members such as a torsion spring or elastic adhesive tape, which is not limited in this embodiment.

It is to be noted that the connection mode between two ends of the first elastic member 253 and the locking member 230 and the lock hook 220 may be selected according to requirements. In this embodiment, the two ends of the first elastic member 253 are hooked to the locking member 230 and the lock hook 220 respectively. Of course, in other embodiments, two ends of the first elastic member 253 may be welded to the locking member 230 and the lock hook 220 respectively, or two ends of the first elastic member 253 may be connected to the locking member 230 and the lock hook 220 by fasteners such as a bolt respectively, which is not limited in this embodiment.

FIG. 6 is a view taken from a first viewing angle to illustrate the structure of the lock 200 according to an embodiment of the present application. Referring to FIGS. 2, 3, and 6, in this embodiment, the housing 210 is a cubic box-like structure, which covers the structures such as the lock hook 220, the locking member 230 and the drive assembly 240 to protect the structures such as the lock hook 220, the locking member 230 and the drive assembly 240. In this embodiment, the lock hook 220 is provided with a U-shaped hold slot 221, hold slot 221. The housing 210 is provided with a first slot 213. When the lock hook 220 is mated with the lock catch 120, the lock catch 120 extends into the inside of the housing 210 through the first slot 213 and is located in the hold slot 221 of the lock hook 220. When the lock hook 220 rotates to the unlocking position, the groove wall of the hold slot 221 can drive the lock catch 120 to exit the housing 210 through the first slot 213. Specifically, in this embodiment, in the case where the lock catch 120 is disposed on the box door 110 and the lock 200 is disposed on the box body 100, when the lock hook 220 is unlocked and the lock hook 220 moves toward the unlocking position under the elasticity of the first elastic member 253, the lock hook 220 pushes the lock catch 120 and also enables the box door 110 to move relative to the box body 100, so as open the opening 101. After the box door 110 opens the opening 101, under the action of the first elastic member 253, as shown in FIG. 3, the lock hook 230 stays at the unlocking position, the locking member 230 stays at the second position, and the opening of the hold slot 221 of the lock hook 220 faces the first slot 213. When the box door 110 is rotated to close the opening 101, the lock catch 120 enters the hold slot 221 through the first slot 213 and the opening of the hold slot 221. The force of rotating the box door 110 enables the lock catch 120 to push the lock hook 220 to rotate against the elastic force of the first elastic member 253. When the box door 110 moves to the position where the opening 101 is closed, the lock hook 220 rotates to the locking position, the locking member 230 rotates to the first position under the action of the first elastic member 253 to lock the lock hook 220 at the locking position.

Further referring to FIGS. 2 and 3, in this embodiment, the lock 200 further includes a second elastic member 254. A first end of the second elastic member 254 is connected to the lock hook 220, and a second end of the second elastic member 254 is connected to the housing 210. Under the action of the second elastic member 254, the lock hook 220 always has a tendency to rotate toward the unlocking position. In this embodiment, the second elastic member 254 is provided so that it is ensured that when the motor 241 drives the driving member 242 to rotate the locking member 230 to the second position, the lock hook 220 can be rotated to the unlocking position under the elasticity of the second elastic member 254. In this manner, the reliability of unlocking of the lock 200 is ensured by the second elastic member 254.

The second elastic member 254 may be selected according to requirements. In this embodiment, the second elastic member 254 is a leaf spring. Of course, in other embodiments, the second elastic member 254 may also be a tension spring, a torsion spring or the like, which is not limited in this embodiment.

It is to be noted that two ends of the second elastic member 254 may be welded to the lock hook 220 and the housing 210 respectively, or two ends of the second elastic member 253 may be connected to the lock hook 220 and the housing 210 by fasteners such as bolts respectively, which is not limited in this embodiment.

Referring to FIGS. 2 and 3, in this embodiment, the lock 200 further includes a first rotation shaft 251. The locking member 230 is pivotally attached to the housing 210 by the first rotation shaft 251. The axis of the first rotation shaft 251 is disposed at an included angle with the rotation axis of the driving member 242. Specifically, in this embodiment, the axis of the first rotation shaft 251 is perpendicular to the rotation axis of the driving member 242. In this manner, the size of the lock 200 in the axial direction of the first rotation shaft 251 can be reduced, which is more conducive to the miniaturization design of the lock 200.

It is to be understood that in other embodiments, the included angle between the axis of the first rotation shaft 251 and the rotation axis of the driving member 242 may be 88° or 91°, etc., which is not limited in this embodiment.

Further referring to FIGS. 2 and 3, the lock 200 further includes a second rotation shaft 252. The locking hook 220 is pivotally attached to the housing 210 by the second rotation shaft 252. The first rotation shaft 251 is disposed in parallel to the second rotation shaft 252. In this manner, it is ensured that the size of the lock 200 in the axial direction of the first rotation shaft 251 is effectively reduced, which is conducive to the miniaturization design of the lock 200.

FIG. 7 is a view illustrating the structure of a motor 241, the driving member 242, and a detection member 262 according to an embodiment of the present application.

Referring to FIGS. 5 and 7, in this embodiment, the driving member 242 further includes a sleeve 245. The sleeve 245 is coaxial with and fixedly connected to the output shaft 249 of the motor 241. Each driving portion 243 is fixedly connected to the sleeve 245. In the state where the driving member 242 rotates, the helical surface 244 rotates around the output shaft 249 of the motor 241. Optionally, the sleeve 245 is directly sleeved on the output shaft 249 of the motor 241. When the output shaft 249 rotates, the sleeve 245 synchronously rotates. The helical surface 244 of the driving portion 243 rotates around the output shaft 249. With such configuration, the structure of the drive assembly 240 can be made more compact, and the size of the lock 200 in the direction of the rotation axis of the driving member 242 can be made smaller, that is, the size of the lock 200 in the axial direction of the output shaft 249 of the motor 241 can be made smaller, which is more conducive to the miniaturization design of the lock 200.

Optionally, referring to FIG. 5, the driving member 242 includes a plurality of driving portions 243. The plurality of driving portions 243 are arranged at intervals in the circumferential direction of the sleeve 245. The helical direction of the helical surface 244 of each driving portion 243 is the same. Since the plurality of driving portions 243 are disposed at intervals in the circumferential direction of the sleeve 245, when the output shaft 249 of the motor 241 rotates by a set angle, the helical surface 244 of one driving portion 243 can be mated with the acceptor 231 of the locking member 230, thereby driving the locking member 230 to rotate to the second position. When the output shaft 249 of the motor 241 rotates for one cycle, the helical surfaces 244 of the plurality of driving portions 243 can sequentially drive the locking member 230 to rotate to the second position, that is, when the output shaft 249 of the motor 241 rotates for one cycle, the locking member 230 can be driven to rotate to the second position a plurality of times. In this manner, the unlocking efficiency of the lock 200 is improved, and the energy consumption is reduced.

Specifically, when the driving member 242 includes a plurality of driving portions 243, in the rotation direction of the driving member 242, the limit surface 282 of each driving portion 243 is connected to the lowest end of the helical surface 244 of a driving portion 243 located downstream of the each driving portion 243. When the lock 200 is unlocked for a plurality of times, the motor 241 drives the driving member 242 to rotate in one direction all the time, which is beneficial to ensure the service life of the motor 241.

Optionally, referring to FIG. 5, the sleeve includes a chassis 246 and a guide column 247 coaxially connected to each other. The outer diameter of the chassis 246 is greater than the outer diameter of the guide column 247. The driving portion 243 is disposed along the outer edge of the chassis 246. Since the driving portion 243 is disposed along the outer edge of the chassis 246, when the output shaft 249 of the motor 241 drives the driving member 242 to rotate at a small angle, driving the acceptor 231 with the helical surface 244 of the driving portion 243 can generate a large displacement. Thus, rotation of the output shaft 249 of the motor 241 by a small angle can reliably drive the locking member 230 to rotate to the second position, so as to reduce the energy consumption. Optionally, when the driving member 242 includes a plurality of driving portions 243, the plurality of driving portions 243 are disposed along the outer edge of the chassis 246.

The connection mode between the output shaft 249 of the motor 241 and the sleeve 245 may be selected according to requirements. Referring to FIGS. 5 and 8, in this embodiment, the sleeve 245 is provided with a central hole 248. The central hole 248 extends through the chassis 246 and the guide column 247. The output shaft 249 of the motor 241 is fixedly inserted into the central hole 248. With such configuration, the output shaft 249 of the motor 241 is simultaneously inserted into both the chassis 246 and the guide column 247, so that there is a larger contact area between the output shaft 249 of the motor 241 and the sleeve 245, thereby ensuring that the motor 241 drives the driving member 242 reliably.

Of course, in other embodiments, the output shaft 249 of the motor 241 may also be connected to the chassis 246 by welding, riveting, or the like, which is not limited in this embodiment.

Referring to FIGS. 2 and 3, in this embodiment, the lock 200 further includes a detection assembly 260. The detection assembly 260 includes a first sensor 261 and a detection member 262. The detection member 262 is configured to be capable of rotating synchronously with the driving member 242. The first sensor 261 is disposed in the housing 210. The first sensor 261 is configured to be mated with or be separated from the detection member 262 to detect whether the acceptor 231 is mated with the helical surface 244. Specifically, when the detection member 262 rotates synchronously with the driving member 242 to be mated with the first sensor 261, the acceptor 231 is mated with the helical surface 244. When the detection member 262 rotates synchronously with the driving member 242 to be separated from the first sensor 261, the acceptor 231 is separated from the helical surface 244.

FIG. 8 is an exploded view of the structure of the motor 241, the driving member 242, and the detection member 262 according to an embodiment of the present application.

Optionally, referring to FIGS. 2, 3, 7, and 8, the detection assembly 260 further includes a support shaft 264. A first end of the support shaft 264 is coaxial with and fixedly connected to the driving member 242, and a second end of the support shaft 264 is fixedly connected to the detection member 262. In the state where the acceptor 231 is mated with the helical surface 244, the detection member 262 is mated with the first sensor 261, and the first sensor 261 outputs a first signal. In the state where the acceptor 231 is separated from the helical surface 244, the detection member 262 is separated from the first sensor 261, and the first sensor 261 outputs a second signal. Such configuration, the position of the helical surface 244 on the driving member 242 is expediently determined by the signal output from the first sensor 261, so that the accuracy of driving the locking member 230 to move to the second position by mating of the helical surface 244 with the acceptor 231 can be ensured.

The storage cabinet 010 further includes a controller (not shown). The controller is communicatively connected to the first sensor 261. The controller is also communicatively connected to the motor 241. The first sensor 261 can send a detection signal to the controller.

Specifically, when the first sensor 261 sends the first signal to the controller, the controller determines that the acceptor 231 is mated with the helical surface 244. When the first sensor 261 sends the second signal to the controller, the controller determines that the acceptor 231 is separated from the helical surface 244, and simultaneously controls the motor 241 to stop operating. It is to be noted that the controller may be communicatively connected to the first sensor 261 through a cable or in a wireless manner such as Wi-Fi or Bluetooth, which is not limited in this embodiment.

It is to be understood that in other embodiments, in the state where the acceptor 231 is mated with the helical surface 244, the detection member 262 is separated from the first sensor 261, and the first sensor 261 outputs the second signal. In the state where the acceptor 231 is separated from the helical surface 244, the detection member 262 is mated with the first sensor 261, and the first sensor 261 outputs the first signal.

In this embodiment, the first end of the support shaft 264 is fixedly inserted into an end of the central hole 248 far away from the output shaft 249 of the motor 241, so that the occupied space in directions other than the direction of the rotational axis of the driving member 242 is reduced, which is conducive to the miniaturization design of the lock 200.

Referring to FIG. 8, the detection member 262 includes a connection ring 265 and a detection sheet 266 fixedly connected to the periphery of the connection ring 265. The connection ring 265 is fixedly sleeved on the second end of the support shaft 264. When the driving member 242 rotates and the helical surface 244 of the driving portion 243 starts to be mated with the acceptor 231, the detection sheet 266 starts to be mated with the first sensor 261, and the first sensor 261 outputs the first signal. As the driving member 242 rotates, the helical surface 244 is always mated with the acceptor 231, and the contact position between the helical surface 244 and the acceptor 231 undergoes displacement along the rotation axis of the driving member 242. During this period, the signal output by the first sensor 261 remains unchanged, that is, the first signal is always output. When the locking member 230 is driven to the second position, the helical surface 244 is separated from the acceptor 231, the detection sheet 266 is simultaneously separated from the first sensor 261, and the first sensor 261 outputs the second signal. In this embodiment, the detection sheet 266 of the detection member 262 that rotates synchronously with the driving member 242 is provided so that whether the helical surface 244 is mated with the acceptor 231 can be detected in real time, which features more accurate and sensitive detection. Thus, the controller can control the start and stop of the motor 241 accurately and in time according to the signal output by the first sensor 261.

Referring to FIG. 8, in this embodiment, the driving member 242 includes a plurality of driving portions 243. The detection member 262 includes a plurality of detection sheets 266. The plurality of detection sheets 266 are fixedly connected to the connection ring 265, and are evenly spaced in the circumferential direction of the connection ring 265. A detection gap 267 is formed between each two adjacent detection sheets 266. The positions of the plurality of detection sheets 266 are disposed in one-to-one correspondence with the positions of the plurality of driving portions 243. When the detection member 262 rotates synchronously with the driving member 242, a detection sheet 266 and a detection gap 267 can be sequentially mated with the first sensor 261. When the detection sheet 266 is mated with the first sensor 261, the first sensor 261 outputs the first signal. According to this, the controller determines that the helical surface 244 is mated with the acceptor 231. When the detection gap 267 is mated with the first sensor 261, that is, the detection sheet 266 is separated from the first sensor 261, the first sensor 261 outputs the second signal to determine that the helical surface 244 is separated from the acceptor 231. According to this, the controller controls the motor 241 to stop operating in time so that the locking member 230 stays at the second position, and the lock hook 220 stays at the unlocking position.

It is to be noted that in this embodiment, the number of the detection sheets 266 is equal to the number of the driving portions 243 to ensure that the mating of the helical surface 244 of the driving portion 243 with the acceptor 231 can be reliably determined by the mating of the detection sheet 266 with the first sensor 261. The positions of the plurality of detection sheets 266 are disposed in one-to-one correspondence with the positions of the plurality of driving portions 243.

Specifically, in this embodiment, detection sheets 266 and the connection ring 265 are integrally formed. In other embodiments, the detection sheet 266 may also be welded or clamped to the connection ring 265.

The first sensor 261 may be selected according to requirements. Referring to FIG. 3, in this embodiment, the first sensor 261 is a photoelectric sensor. The first sensor 261 includes an optical emitter 268 and an optical receiver 269 that are opposite to and spaced apart from each other. The optical emitter 268 and the optical receiver 269 are both communicatively connected to the controller. When the detection member 262 rotates synchronously with the driving member 242, the detection sheet 266 and the detection gap 267 sequentially position between the optical emitter 268 and the optical receiver 269. When the detection sheet 266 positions between the optical emitter 268 and the optical receiver 269, the optical receiver 269 cannot receive light emitted by the optical emitter 268, and the optical receiver 269 outputs the first signal. When the detection gap 267 positions between the optical emitter 268 and the optical receiver 269, the optical receiver 269 receives the light emitted by the optical emitter 268, and the optical receiver 269 outputs the second signal.

Referring to FIGS. 2 and 3, in this embodiment, the lock 200 further includes a second sensor 263. The second sensor 263 is disposed in the housing 210, and is configured to detect the position of the locking member 230. Specifically, when the locking member 230 is at one of the first position and the second position, the locking member 230 is mated with the second sensor 263, and the second sensor 263 outputs a third signal. When the locking member 230 is at the other of the first position and the second position, the locking member 230 is separated from the second sensor 263, and the second sensor 263 outputs a fourth signal. With such configuration, it is convenient to determine the position of the locking member 230, thereby determining whether the locking member 230 reliably locks the lock hook 220 at the locking position.

The second sensor 263 may be selected according to requirements. In this embodiment, the second sensor 263 is a microswitch. When the locking member 230 is at the second position, the locking member 230 presses the second sensor 263, and the second sensor 263 outputs the third signal. When the locking member 230 is at the first position, the locking member 230 is separated from the second sensor 263, and the second sensor 263 outputs the fourth signal. Of course, in other embodiments, the second sensor 263 may also be a photoelectric sensor, which is not limited in this embodiment.

It is to be understood that in other embodiments, when the locking member 230 is at the second position, the locking member 230 is separated from the second sensor 263, and the second sensor 263 outputs the fourth signal. When the locking member 230 is at the first position, the locking member 230 presses the second sensor 263, and the second sensor 263 outputs the third signal.

It is to be noted that in other embodiments, the detection assembly 260 may include only the first sensor 261 and does not include the second sensor 263. Alternatively, the detection assembly 260 may include only the second sensor 263 and does not include the first sensor 261.

FIG. 9 is a view illustrating the structure of the locking member 230 according to an embodiment of the present application. Referring to FIG. 9, in this embodiment, the locking member 230 is provided with a groove 232. The acceptor 231 is disposed in the groove 232. When the helical surface 244 is mated with the acceptor 231, the driving member 242 at least partially extends into the groove 232. With such configuration, the structure of the lock 200 can be made more compact.

Optionally, the section shape of the acceptor 231 is triangular, and the bottom edge of the acceptor 231 is formed by the bottom wall of the groove 232. The top sharp corner of the acceptor 231 is mated with the helical surface 244. With such configuration, when the driving member 242 rotates so that the helical surface 244 of the driving portion 243 enters the groove 232, it is ensured that the helical surface 244 can be reliably mated with the acceptor 231. Thus, the locking member 230 is driven to move to the second position by movement of the contact position between the helical surface 244 and the acceptor 231.

Optionally, the top sharp corner of the acceptor 231 is rounded so that the transition becomes smoother when the helical surface 244 entering the groove 232 is mated with or is separated from the acceptor 231.

In combination with FIGS. 2, 3, and 9, in this embodiment, the locking member 230 further includes a blocking surface 233 for mating with the lock hook 220. Specifically, when the lock hook 220 is at the locking position and the locking member 230 is at the first position, the blocking surface 233 abuts against the lock hook 220 to prevent the lock hook 220 from rotating toward the unlocking position, so that the lock hook 220 is locked at the locking position.

Optionally, referring to FIG. 9, the locking member 230 is provided with an insertion hole 234, and the first rotation shaft 251 is inserted into and is mated with the insertion hole 234. The blocking surface 233, the insertion hole 234, and the acceptor 231 are arranged in sequence. With such configuration, when the helical surface 244 is mated with the acceptor 231, the locking member 230 can be reliably driven to rotate around the first rotation shaft 251. Then the locking member 230 is driven to rotate from the first position to the second position, and the blocking surface 233 is separated from the lock hook 220 to unlock the position of the lock hook 220.

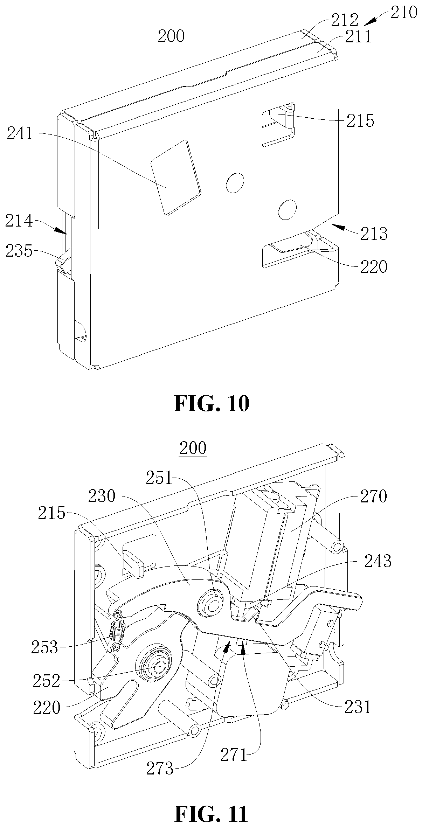

FIG. 10 is a view taken from a second viewing angle to illustrate the structure of the lock 200 according to an embodiment of the present application. Optionally, referring to FIGS. 9 and 10, the lock 200 further includes an emergency pull rod 235. The housing 210 is further provided with a second slot 214. A first end of the emergency pull rod 235 is fixedly connected to the locking member 230, and a second end of the emergency pull rod 235 extends from the second slot 214 to the outside of the housing 210. A force is applied to the second end of the emergency pull rod 235 from the outside of the housing 210, so that the locking member 230 can be rotated from the first position to the second position by the emergency pull rod 235 to unlock the lock hook 220. In this manner, when the motor 241 is faulty or powered off, or when the mating between the driving member 242 and the acceptor 231 is faulty, the emergency pull rod 235 can be manually operated to enable the locking member 230 to rotate to the second position. Thus, the position of the lock hook 220 is manually unlocked, thereby ensuring the reliability of unlocking of the lock 200.

It is to be noted that the preceding blocking surface 233, insertion hole 234, acceptor 231, and emergency pull rod 235 are arranged in sequence, so that the size of the lock 200 in the axial direction of the first rotation shaft 251 can be reduced.

Specifically, the connection mode between the emergency pull rod 235 and the locking member 230 may be selected according to requirements. In this embodiment, the emergency pull rod 235 is integrally formed with the locking member 230. Of course, in other embodiments, the emergency pull rod 235 may be welded to the locking member 230, or the emergency pull rod 235 may be connected to the locking member 230 by fasteners such as bolts.

FIG. 11 is a partial view illustrating the structure of the lock 200 according to an embodiment of the present application. Referring to FIGS. 10 and 11, in this embodiment, the lock 200 further includes a limit plate 215. The limit plate 215 is disposed in the housing 210. The limit plate 215 is configured to abut against the locking member 230 to block the locking member 230 when the locking member 230 rotates from the first position to the second position, thereby preventing the locking member 230 from continuing to rotate beyond the second position.

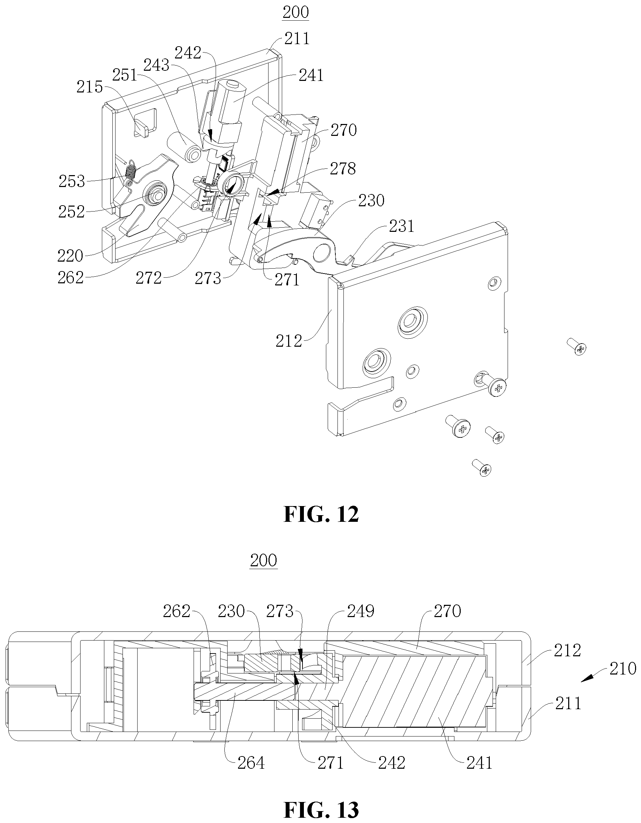

FIG. 12 is an exploded view of the structure of the lock 200 according to an embodiment of the present application. FIG. 13 is a section view of the lock 200 according to an embodiment of the present application.

Referring to FIGS. 10, 12, and 13, in this embodiment, the housing 210 includes a first housing 211 and a second housing 212. The first housing 211 is connected to the second housing 212 to form a box-like structure. The lock 200 further includes a shield 270. Two ends of the first rotation shaft 241 are supported by the first housing 211 and the second housing 212 respectively. The locking member 230 is sleeved on the first rotation shaft 251. The shield 270 is disposed between the first housing 211 and the second housing 212. The shield 270 is provided with a support surface 271 for supporting the acceptor 231. The support surface 271 is provided on the shield 270 so that it can be ensured that the acceptor 231 is reliably mated with the helical surface 244 of the driving portion 243.

It is to be noted that the preceding limit plate 215 is fixedly connected to the first housing 211 and is located between the first housing 211 and the second housing 212. The limit plate 215 is integrally formed with the first housing 211. Of course, in other embodiments, the limit plate 215 may also be welded to the first housing 211 or connected to the first housing 211 by a fastener such as a bolt.

Referring to FIG. 12, in this embodiment, the shield 270 is provided with a positioning hole 272. The first rotation shaft 251 is socketed in the positioning hole 272. With such configuration, the first rotation shaft 251 is socketed in the positioning hole 272, so that the shield 270 can be reliably disposed between the first housing 211 and the second housing 212, thereby ensuring that the shield 270 is reliably mounted.

Optionally, referring to FIG. 12, the shield 270 is further provided with a limiting groove 273. The bottom wall of the limiting groove 273 is the support surface 271. When the locking member 230 rotates between the first position and the second position, the acceptor 231 is always located in the limiting groove 273. With such configuration, when the locking member 230 rotates between the first position and the second position, the position stability of the acceptor 231 can be ensured by the limiting groove 273, so that when the helical surface 244 of the driving member 242 enters the groove 232 next time, the helical surface 244 of the driving member 242 can be reliably mated with the acceptor 231.

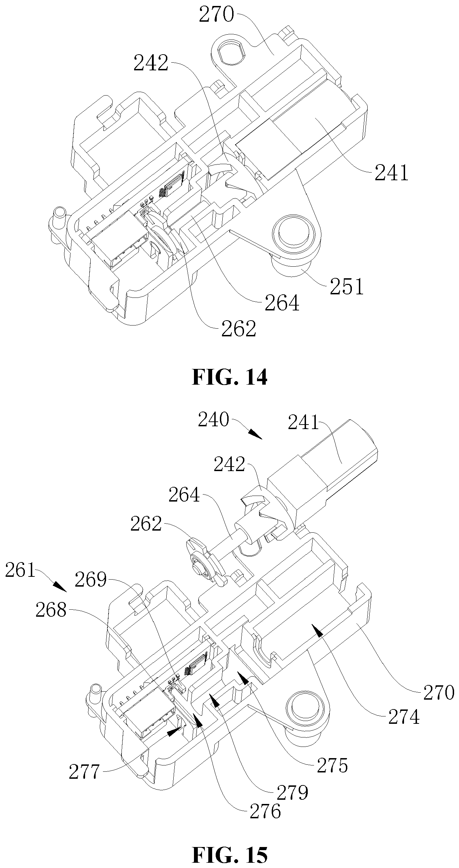

FIG. 14 is a view illustrating the structure of a shield 270 and a drive assembly 240 according to an embodiment of the present application. FIG. 15 is an exploded view of the structure of the shield 270 and the drive assembly 240 according to an embodiment of the present application.

Referring to FIGS. 13 to 15, the shield 270 is further provided with a motor hold groove 274. The motor 241 is embedded in the motor hold groove 274. The first housing 211, the motor 241, the shield 270, and the second housing 212 are abutted in sequence in the axial direction of the first rotation shaft 251. With such configuration, the motor 241 can be reliably disposed in the housing 210 by the first housing 211, the shield 270, and the second housing 212 without a separate fixed structure for the motor 241. Moreover, the motor 241 is embedded in the motor hold groove 274, so that the motor 241 can be protected from foreign matter such as dust.

It is to be noted that referring to FIG. 10, the first slot 213 and the second slot 214 are located at two ends of the housing 210 respectively to avoid interference between the lock hook 220 and the emergency pull rod 235.

Specifically, to improve the reliability of the connection between the first housing 211 and the second housing 212, the first housing 211 is connected to the second housing 212 by a fastener such as a bolt or a screw. With such configuration, the reliability of the locking member 230, the lock hook 220, the drive assembly 240, and the shield 270 disposed between the first housing 211 and the second housing 212 can be ensured.

Referring to FIGS. 12 and 15, the shield 270 is further provided with a driving member hold groove 275. The bottom wall of the driving member hold groove 275 is provided with a notch 278. The driving member 242 is located in the driving member hold groove 275, and the driving portion 243 is exposed through the notch 278 so that the helical surface 244 is mated with the acceptor 231. With such configuration, the structure can be more compact, and the impact and interference of other components on the driving member 242 are reduced.

Referring to FIG. 15, the shield 270 is further provided with a detection member hold groove 276. The first sensor 261 and the detection member 262 are disposed in the detection member hold groove 276 and are disposed between the shield 270 and the first housing 211. With such configuration, it is possible to avoid the adverse effect of foreign matter such as dust on the detection member 262 and the first sensor 261, thereby ensuring that the detection result is accurate. Specifically, the shield 270 is further provided with a support shaft hold groove 279. The support shaft hold groove 279 communicates with both the detection member hold groove 276 and the driving member hold groove 275. The support shaft 264 is embedded in the support shaft hold groove 279.

Specifically, referring to FIG. 15, the shield 270 is further provided with a locking slot 277. The locking slot 277 communicates with the detection member hold groove 276. The end of the support shaft 264 far away from the driving member 242 extends out of the connection ring 265 and engages with the locking slot 277. With such configuration, it can be ensured that the detection member 262 is reliably disposed between the shield 270 and the first housing 211.

In this embodiment, the lock 200 may be disposed in the storage cabinet 010 and configured to be mated with the lock catch 120 disposed in the storage cabinet 010. When the box door 110 of the storage cabinet 010 closes the opening 101 of the box body 100, the lock hook 220 of the lock 200 is mated with the lock catch 120, and the locking member 230 is at the first position. In this manner, the box door 110 can be reliably locked at the position where the opening 101 is closed. When it is necessary to open the box door 110, the output shaft 249 of the motor 241 drives the driving member 242 to rotate. The helical surface 244 of the driving portion 243 rotates and is mated with the acceptor 231 of the locking member 230. Thus, the movement of the contact position between the helical surface 244 and the acceptor 231 is used to drive the locking member 230 to rotate from the first position to the second position to unlock the lock hook 220. In this manner, the lock hook 220 can move to the unlocking position where the lock hook 220 is separated from the lock catch 120.

In summary, in the lock 200 provided by the present application, when the motor 241 drives the driving member 242 to rotate, the helical surface 244 on the driving portion 242 is mated with the acceptor 231 of the locking member 230, that is, the contact position between the helical surface 244 and the acceptor 231 undergoes displacement in the direction of the rotation axis of the driving member 242, thereby pushing the locking member 230 to rotate to the second position. In this manner, the position of the lock hook 200 is unlocked. The lock 200 is simple in structure and conducive to miniaturization design.

## Claims

1. A lock configured to be mated with a lock catch, comprising a housing, a lock hook, a locking member, and a drive assembly, wherein the lock hook and the locking member are pivotally attached to the housing, the lock hook has a locking position where the lock hook is mated with the lock catch and an unlocking position where the lock hook is separated from the lock catch, and the locking member has a first position for locking the lock hook at the locking position and a second position for unlocking the lock hook at the locking position; and
the drive assembly comprises a motor and a driving member, the driving member is in transmission connection with an output shaft of the motor, the driving member comprises at least one driving portion having a helical surface, the locking member has an acceptor, and in a state where the output shaft of the motor drives the driving member to rotate, the helical surface is capable of mating with the acceptor to drive the locking member to move from the first position to the second position.

2. The lock according to claim 1, wherein the locking member is pivotally attached to the housing by a first rotation shaft, and an axis of the first rotation shaft is disposed at an included angle with a rotation axis of the driving member.

3. The lock according to claim 1, wherein the driving member further comprises a sleeve coaxial with and fixedly connected to the output shaft of the motor, each of the at least one driving portion is fixedly connected to the sleeve, and in the state where the driving member rotates, the helical surface rotates around the output shaft of the motor.

4. The lock according to claim 3, wherein the driving member comprises a plurality of driving portions, the plurality of driving portions are arranged at intervals in a circumferential direction of the sleeve, and a helical direction of a helical surface of each of the plurality of driving portions is the same.

5. The lock according to claim 3, wherein the sleeve comprises a chassis and a guide column coaxially connected to each other, an outer diameter of the chassis is greater than an outer diameter of the guide column, and the driving portion is disposed along an outer edge of the chassis.

6. The lock according to claim 1, wherein the lock satisfies at least one of the following:
a. the lock further comprises a detection assembly, and the detection assembly comprises a first sensor and a detection member, wherein the detection member is configured to be capable of rotating synchronously with the driving member, the first sensor is disposed in the housing and is configured to be mated with or be separated from the detection member to detect whether the acceptor is mated with the helical surface; or
b. the lock further comprises a second sensor disposed in the housing, and the second sensor is configured to detect a position of the locking member.

7. The lock according to claim 6, wherein the detection assembly further comprises a support shaft, wherein a first end of the support shaft is coaxial with and fixedly connected to the driving member, and a second end of the support shaft is fixedly connected to the detection member; in a state where the acceptor is mated with the helical surface, the detection member is mated with the first sensor, and the first sensor outputs a first signal; and in a state where the acceptor is separated from the helical surface, the detection member is separated from the first sensor, and the first sensor outputs a second signal.

8. The lock according to claim 1, wherein the locking member is pivotally attached to the housing by a first rotation shaft, the locking member is provided with a groove, the acceptor is disposed in the groove, and in a state where the helical surface is mated with the acceptor, the driving member at least partially extends into the groove.

9. The lock according to claim 1, wherein the housing comprises a first housing and a second housing, and the lock further comprises a first rotation shaft and a shield, wherein two ends of the first rotation shaft are supported by the first housing and the second housing respectively, the locking member is sleeved on the first rotation shaft, the shield is disposed between the first housing and the second housing, and the shield is provided with a support surface for supporting the acceptor.

10. A storage cabinet, comprising a box body, a box door, a lock catch, and the lock according to any one of claims 1 to 9, wherein the box body is provided with an opening, the box door is movably connected to the box body, and the box door is configured to close or open the opening; the lock catch is disposed in one of the box door and the box body, and the lock is disposed in the other of the box door and the box; and in a state where the box door closes the opening, the lock hook of the lock is mated with the lock catch to lock the box door at a position where the opening is closed.
